Europäisches Patentamt

European Patent Office

Office européen des brevets

(11) Publication number: **0 265 891**
**A2**

## (12) EUROPEAN PATENT APPLICATION

(21) Application number: **87115692.3**

(22) Date of filing: **26.10.87**

(51) Int. Cl.⁴: **B60J 1/20**

(30) Priority: **27.10.86 IT 5401186 U**

(43) Date of publication of application:
**04.05.88 Bulletin 88/18**

(84) Designated Contracting States:
**BE DE ES FR GB IT**

(71) Applicant: **TIS TECNOLOGIA, INNOVAZIONE, STILE S.r.l.**
**Via Ventimiglia, 156**
**I-10127 Torino(IT)**

(72) Inventor: **Marchino, Piero**
**Viale XXV Aprile, 109/4**
**I-10133 Torino(IT)**

(74) Representative: **Prato, Roberto et al**
**c/o Ingg. Carlo e Mario Torta Via Viotti 9**
**I-10121 Torino(IT)**

(54) **Screen for the side window of a motor vehicle, and motor vehicle incorporating such a screen.**

(57) A screen (16) for a motor vehicle window, which screen comprises a transparent sheet (17) of substantially the same shape and size as the upper portion of the window, and fastening means (18) designed to engage inside a peripheral frame (4) on the window, in such a manner as to secure the sheet (17) to the inner side of the window and facing the upper portion of the same.

Fig.5

Fig.1

EP 0 265 891 A2

# SCREEN FOR THE SIDE WINDOW OF A MOTOR VEHICLE, AND MOTOR VEHICLE INCORPORATING SUCH A SCREEN

The present invention relates to a screen, particularly for the side window of a motor vehicle, and a motor vehicle incorporating such a screen.

Motor vehicles are known to be fitted frequently with fixed or movable screens, which may be positioned over the side windows, in particular, over the upper portion of the same.

Known screens of the aforementioned type are mainly designed for filtering or shielding against sunlight, so as to prevent discomfort to passengers, and safeguard the driver against hazardous glare. Screens of this sort usually consist either of sun screens secured in articulated manner to the roof panel of the vehicle and which may be positioned alternatively over the upper portion of the windscreen or side window, or sliding screens which roll up inside the roof panel.

Screens of the aforementioned types involve a number of major drawbacks: they are expensive; difficult to assemble; require manual positioning by the user; and, being secured to the vehicle roof, occupy the top part of the door opening when the door is open.

Other known types of screens are mainly designed to deflect the air flow along the side of the vehicle, so as to enable the side windows to be lowered at least partially when driving; prevent air currents from blowing directly inside the passenger compartment; substantially reduce the noise produced by the air swirl; and prevent rain from entering the passenger compartment. Screens of this sort usually consist of transparent, convex shells fitted to the outside of the window frame, which considerably impair visibility through the side window, and assembly of which is both complex and time-consuming, and requires the use of tools.

The aim of the present invention is to provide a screen for the side window of a motor vehicle, designed to function efficiently both as a sun screen and deflector, and to overcome the drawbacks associated with the aforementioned known types of screens.

Further advantages of the present invention will be disclosed in the following description.

With this aim in view, according to the present invention, there is provided a screen for a motor vehicle window, said screen comprising a transparent sheet substantially the same shape as at least the upper portion of the said window, and means for fastening the said sheet to at least a peripheral element on the said window; characterised by the fact that the said fastening means are designed to engage inside the said peripheral element in such a manner as to secure the said sheet to the inner side of the said window and facing the said upper portion of the same.

The present invention also relates to a motor vehicle having at least one side window and at least one screen comprising a transparent sheet substantially the same shape as at least the upper portion of the said window, and means for fastening the said sheet to at least a peripheral element on the said window; characterised by the fact that the said fastening means are designed to engage inside the said peripheral element in such a manner as to secure the said sheet to the inner side of the said window and facing the said upper portion of the same.

A number of preferred, non-limiting embodiments of the present invention will be described with reference to the accompanying drawings, in which :

Fig.1 shows a side view from the inside of a motor vehicle door incorporating a screen in accordance with the teachings of the present invention;

Fig.2 shows a partial, larger-scale view of the Fig.1 screen;

Fig.3 shows a section along line III-III in Fig.2;

Fig.4 shows a partial section along line IV-IV in Fig.2;

Fig.5 shows a partial, larger-scale section along line V-V in Fig.1;

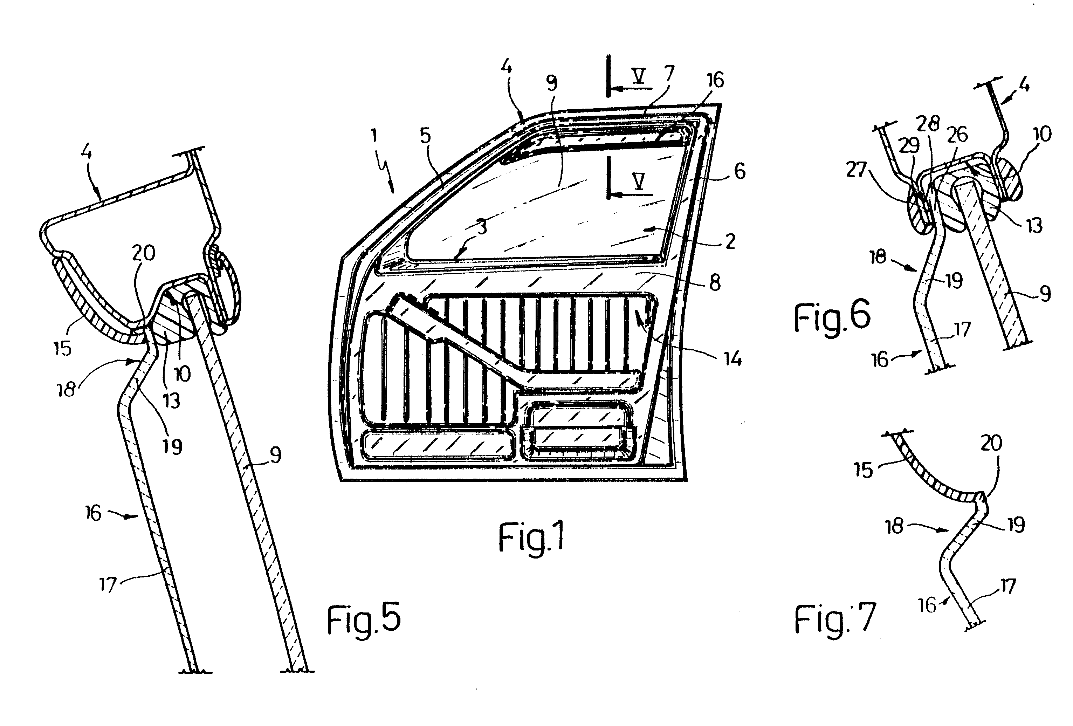

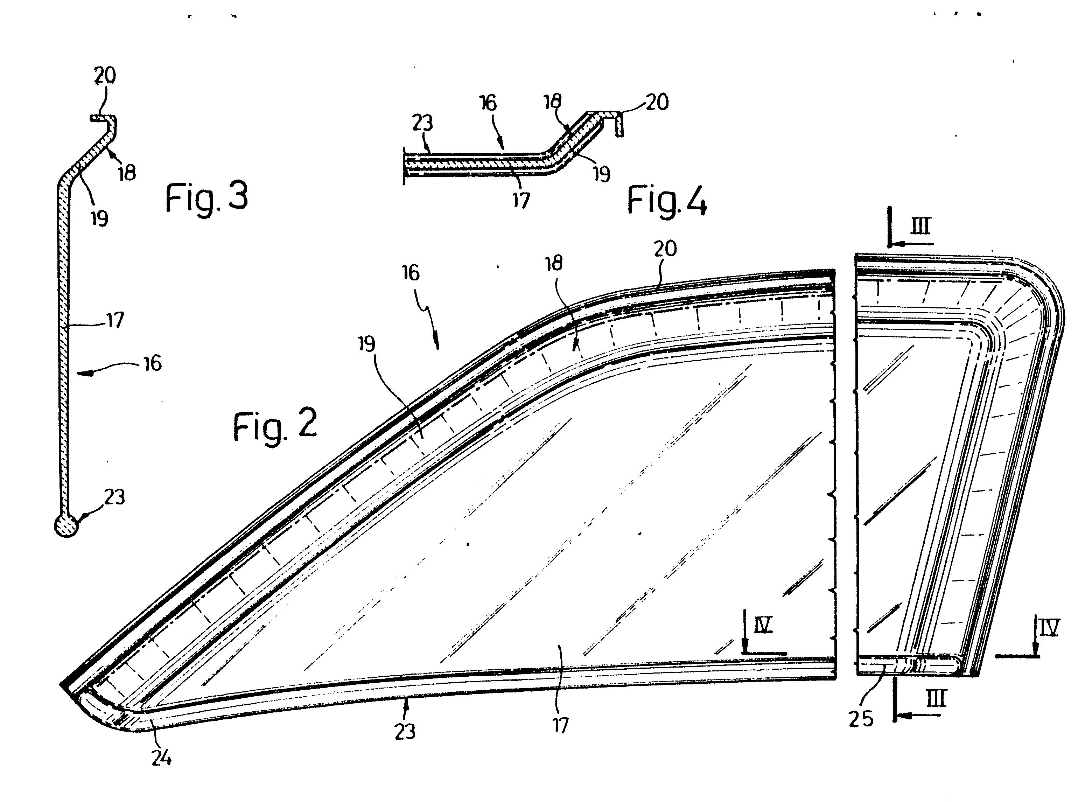

Fig.s 6 and 7 show partial sections similar to the one in Fig.5, and relative to variations of the screen in Fig.s 1 and 2;

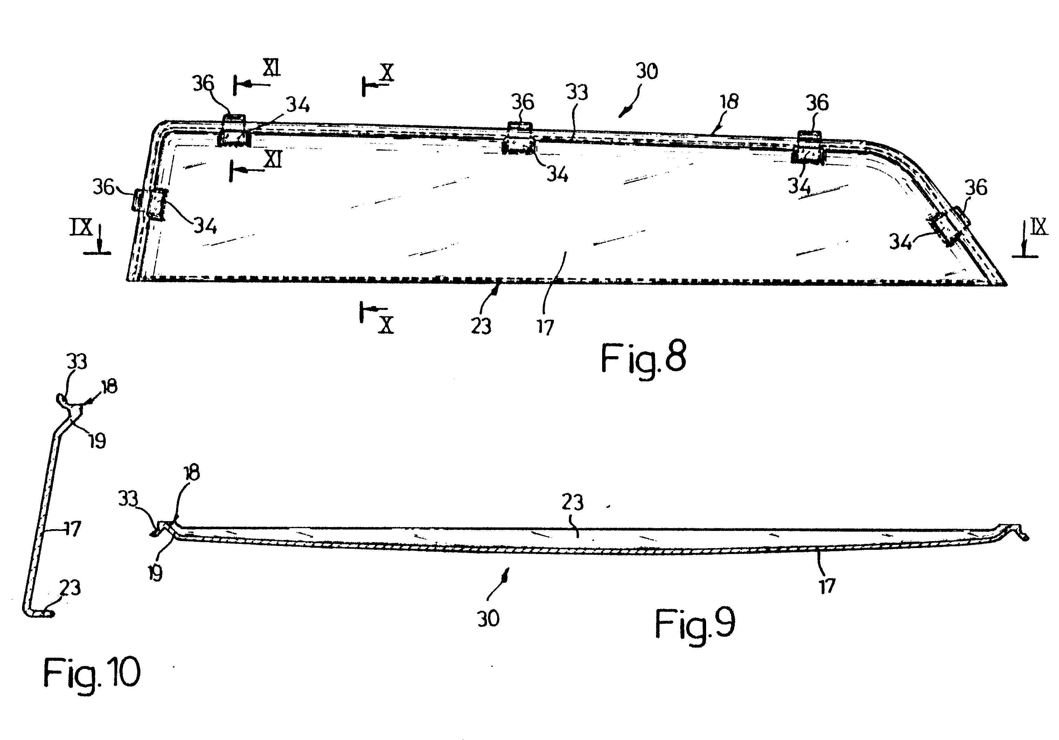

Fig.8 shows a side view of a second embodiment of a screen in accordance with the present invention;

Fig.s 9 and 10 show respective sections along lines IX-IX and X-X in Fig.8;

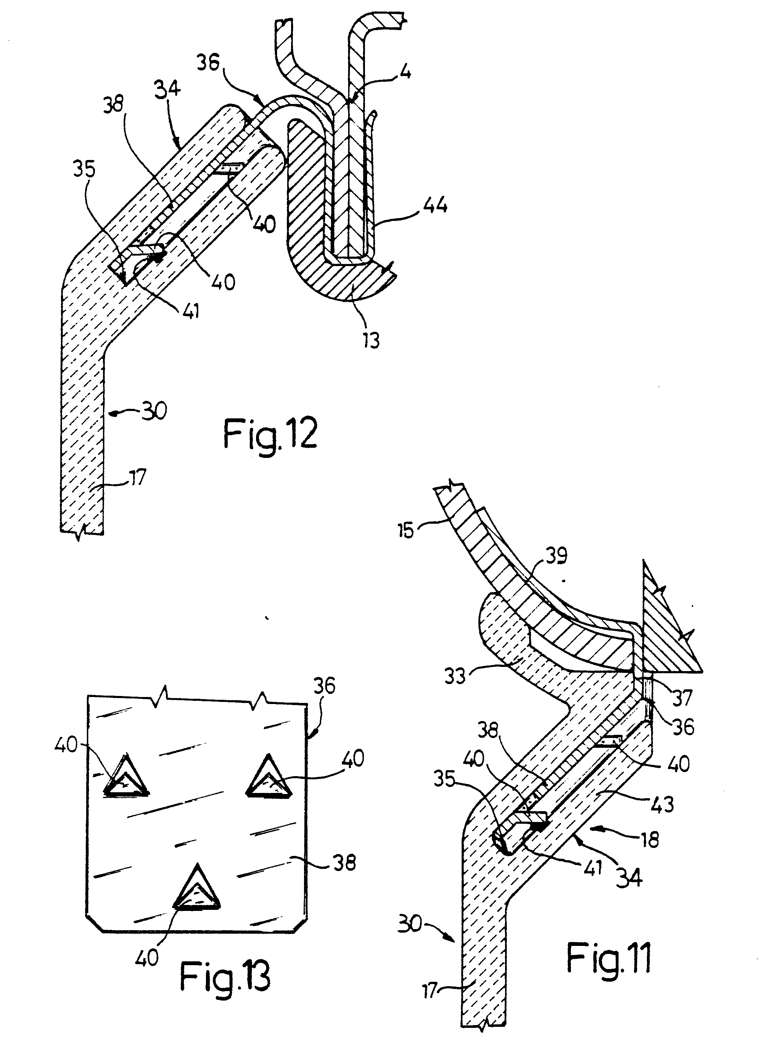

Fig.11 shows a partial, larger-scale section along line XI-XI in Fig.8;

Fig.12 shows a section similar to the one in Fig.11, and relative to a variation of the screen in Fig.8;

Fig.13 shows a partial, larger-scale view of a detail in Fig.11 or 12.

Number 1 in Fig.1 indicates a motor vehicle door comprising, in known manner and on the upper portion, a window 2 defined by an opening 3, in turn, defined by a frame 3 consisting of two lateral posts 5 and 6 and an upper and lower cross member 7 and 8, and by a glass pane 9 designed to slide vertically between the said posts 5 and 6. As shown clearly in Fig.5, a peripheral seat 10 inside frame 4 houses known elements 13 for sealing and guiding glass pane 9 and conveniently formed from foam material. Door 1 comprises an upholstery panel indicated as a whole by 14, secured to the frame of door 1 in any convenient manner, and comprising a molding 15 (Fig.5) secured to an inner wall of frame 4 on window 2.

According to the present invention, a screen 16, as shown in detail in Fig.s 2 to 4, is fitted to frame 4 on the inside of window 2. The said screen 16 consists of a substantially flat sheet 17 of transparent, conveniently dark-coloured, synthetic material. The said sheet 17 is substantially trapezoidal in shape, substantially the same size as a short upper portion of opening 3 of window 2, and presents a shaped peripheral portion 18 extending along the top and side edges of sheet 17 and designed to cooperate with upper cross member 7 and respective upper portions of posts 5 and 6 of frame 4.

In more detail, the said shaped portion 18 comprises a wing 19 sloping in relation to the plane of sheet 17, and from the outer edge of which there extends an L-shaped edge 20 bent facing the plane of sheet 17. Sheet 17 gradually decreases in thickness from shaped portion 18 to a lower edge 23 constituting a circular-section stiffening rib. The said edge 23 presents a downwardly-convex longitudinal profile along portion 24 close to the front edge, and a substantially straight profile along portion 25 close to the rear edge, the said portions being amply blended.

Screen 16 is assembled as shown in Fig.5. Shaped portion 18 is fitted on to frame 14 by inserting L-shaped edge 20 between molding 15, frame 4 and sealing and guide element 13.

The said profile and the manner in which shaped portion 18 is mounted on to frame 4 may obviously vary depending on the vehicle and, therefore, the design of frame 4. Fig.s 6 and 7 show two variations, the component parts of which, for the sake of simplicity in the following description, will be referred to using the same reference numbers employed for similar of identical components in Fig.s 1 to 5.

In Fig.6, shaped portion 18 of sheet 17 terminates in a flat edge 26 sloping slightly in relation to the plane of sheet 17. In use, the said edge 26 is inserted between sealing and guide element 13 and an inner wall 27 of respective seat 10. For this purpose, the said edge 26 presents a wedge-shaped peripheral tooth 28 for facilitating insertion of edge 26, but at the same time preventing its withdrawal, by jamming a projecting edge 29 against inner wall 27.

Screen 19 in Fig.7 is similar to the one in Fig.s 1 to 5, except that it is pressed integral with molding 15 which substantially constitutes an integral extension of the turned-up edge 20.

Fig.s 8 to 10 show a second embodiment of the screen according to the present invention, indicated as a whole by 30. In this case, too, the same reference numbers will be used for indicating components similar or identical to those already described.

Screen 30 comprises a slightly outwardly-concave sheet 17 having a shaped peripheral portion 18 extending along the top and side edges, and a substantially flat bottom edge 23 turned horizontally outwards in relation to sheet 17.

Shaped portion 18 comprises a wing 19 sloping outwards of the vehicle, and an outer edge 33 sloping the opposite way and designed to cooperate externally with molding 15 of frame 4 (Fig.11). Along sloping wing 19, there are formed a number of substantially parallelepiped enlargements 34 having a respective dead inner cavity 35 opening outwardly at the juncture of wing 19 and outer edge 33. Screen 30 also comprises a number of grips 36 conveniently pressed from steel. The said grips 36 comprise, in one piece, a center portion 37 at the ends of which there are formed a flat rectangular portion 38 sloping approximately 135° in relation to center portion 37 and designed to engage a respective cavity 35, and a curved portion 39 designed to cooperate with molding 15 as described in more detail later on. As shown clearly in Fig.s 11 and 13, on the said flat portion 38, there are pressed three triangular-shaped teeth 40 sloping in relation to flat portion 38 and designed to flexibly engage respective recesses 41 formed in wall 43 of cavity 35.

Screen 30 is assembled as follows. Grips 36 are first inserted inside respective cavities 35, after which (Fig.11) shaped portion 18 of screen 30 is fitted on to molding 15 so that shaped portions 39 of grips 36 cooperate flexibly with molding 15 and grip it against outer edge 33. Fig.12 shows a variation of grip 36 suitable for vehicles with no moldings 15. In this case, grip 36 comprises a flat portion 37 as already described, and a U-shaped portion 44 designed to grip flexibly about frame 4 and underneath sealing element 13.

The advantages of screens 16, 30 will be clear from the foregoing description. First and foremost, screens 16, 30 enable the windows to be lowered when driving, by substantially reducing the noise produced by the air swirl, and direct entry of air currents and rain, while at the same time providing for effective shielding against sunlight without impairing visibility through the side windows.

Assembly of screens 16, 30 is extremely straightforward and fast with no need for assembly tools, while at the same time ensuring a reliable, vibrationfree fit.

Finally, screens 16, 30, which are mounted integral with the vehicle door, occupy only a very limited area, and in no way limit the door opening when the door is opened. To those skilled in the art it will be clear that changes may be made to screens 16, 30 as described and illustrated herein without, however, departing from the scope of the present invention. For example, changes may be made to the shape and size of screens 16, 30, depending on the shape and size of the vehicle windows; to the material from which they are formed; and to the manner in which they are fitted.

**Claims**

1) - A screen for a motor vehicle window, said screen comprising a transparent sheet substantially the same shape as at least the upper portion of the said window, and means for fastening the said sheet to at least a peripheral element on the said window; characterised by the fact that the said fastening means (20, 36) are designed to engage inside the said peripheral element (4, 15) in such a manner as to secure the said sheet (17) to the inner side of the said window (2) and facing the said upper portion of the same.

2) - A screen as claimed in Claim 1, characterised by the fact that the said fastening means (20) are integral with the said sheet (17).

3) - A screen as claimed in Claim 1 or 2, characterised by the fact that the said fastening means comprise a shaped portion (18) of the said sheet (17) extending along at least the top edge of the same.

4) - A screen as claimed in Claim 3, characterised by the fact that the said shaped portion (18) extends along at least a side edge of the said sheet (17).

5) - A screen as claimed in Claim 1, characterised by the fact that the said fastening means comprise a number of flexible elements (36) mounted on a peripheral portion (18) of the said sheet.

6) - A screen as claimed in Claim 5, characterised by the fact that the said flexible elements comprise an engaging portion (38) designed to fit inside a respective seat (35) on the said peripheral portion (18) of the said sheet (17), and a restraining portion (39, 44) designed to cooperate flexibly with the said peripheral element (4, 15) of the said window (2).

7) - A screen as claimed in Claim 6, characterised by the fact that the said engaging portion (38) comprises a number of teeth (40) designed to cooperate with respective recesses (41) in the respective said seat (35).

8) - A screen as claimed in one of the foregoing Claims from 5 to 7, characterised by the fact that the said flexible elements (36) are pressed from sheet steel.

9) - A screen as claimed in one of the foregoing Claims, characterised by the fact that the said peripheral element comprises at least one portion of a frame (4) on the said window (2).

10) - A screen as claimed in one of the foregoing Claims, characterised by the fact that the said peripheral element comprises at least one portion of a molding (15) on the said window (2).

11) - A screen as claimed in one of the foregoing Claims, characterised by the fact that the said transparent sheet (17) is dark in colour.

12) - A screen as claimed in one of the foregoing Claims, characterised by the fact that the said transparent sheet (17) is substantially flat.

13) - A screen as claimed in any one of the foregoing Claims from 1 to 11, characterised by the fact that the said transparent sheet (17) is slightly outwardly-concave.

14) - A screen as claimed in one of the foregoing Claims, characterised by the fact that the said transparent sheet (17) decreases in thickness downwards.

15) - A screen as claimed in one of the foregoing Claims, characterised by the fact that the said transparent sheet (17) presents a strengthening rib (23) along its bottom edge.

16) - A motor vehicle having at least one side window and at least one screen comprising a transparent sheet substantially the same shape as at least the upper portion of the said window, and means for fastening the said sheet to at least a peripheral element on the said window; characterised by the fact that the said fastening means (18, 36) are designed to engage inside the said peripheral element (4, 15) in such a manner as to secure the said sheet (17) to the inner side of the said window (2) and facing the said upper portion of the same.

17) - A motor vehicle as claimed in Claim 16, characterised by the fact that the said fastening means (18) are integral with the said sheet (17).

18) - A screen as claimed in Claim 16, characterised by the fact that the said fastening means comprise a number of flexible elements (36) mounted on a peripheral portion (18) of the said sheet.

Fig.6

Fig.7

Fig.1

Fig.5

Fig. 3

Fig. 4

Fig. 2

Fig.8

Fig.9

Fig.10

0 265 891

Fig.12

Fig.13

Fig.11